# EUROPEAN PATENT APPLICATION

(11) **EP 1 600 714 A1**
(43) Date of publication of application: **30.11.2005**
(21) Application number: 05075999.2
(22) Date of filing: 27.04.2005
(51) Int. Cl.: F25J 3/04

(54) **Providing gases to aromatic carboxylic acid manufacturing processes**

(30) Priority: 12.05.2004 US 570383 P; 01.04.2005 US 95656
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Marin, Ovidiu, 92210 St Cloud (FR); Binoist, Manuel, 75020 Paris (FR); Xu, Mindi, Naperville, IL 60540 (US)
(74) Representative: Ducreux, Marie

(57) **Abstract**

A chemical manufacturing system includes an air compressor configured to receive and pressurize a stream of air to a selected pressure, an air separation unit configured to receive pressurized air from the air compressor and generate a stream of oxygen and a stream of nitrogen at selected purity levels from the pressurized air, a chemical generation system configured to receive at least the stream of oxygen from the air separation unit, and a reactant supply to provide a reactant to the chemical generation system. During system operation, the reactant is oxidized to form a product within the chemical generation system. In one embodiment, the reactant is paraxylene, and the chemical generation system produces a terephthalic acid product.

## Description

### Background of Invention

### Field of Invention

The present invention pertains to the manufacture of aromatic carboxylic acids and other chemical compounds formed via oxidation reactions.

### Related Art

Purified terephthalic acid (PTA) is utilized as a raw material in the manufacture of a number of products, including polyester fibers, films, and molding resins. Purified terephthalic acid is conventionally produced through two processing steps, including a crude terephtalic acid (TA) manufacturing process and a purification process, in which the crude TA is purified to form a PTA product. Crude terephthalic acid is usually produced with paraxylene (p-xylene) through chemical reactions and physical treatment processes. In a conventional production process for crude terephthalic acid, p-xylene is oxidized with oxygen (e.g., by combining crude TA with air) in an oxidation reactor in the presence of a catalyst and a solvent. The reaction product of TA is dispersed in a liquid and is crystallized and separated from its mother liquor (e.g., by centrifugation and/or filtration). The crude terephthalic acid could be purified through either of several conventional approaches, such as liquid extraction, dissolution of impurities in water or other solvent, etc. Both crude and the purified terephthalic acid are white powders that are not reactive in air.

In the process of manufacturing crude TA, the reaction of p-xylene with oxygen is typically carried out in a liquid phase, within a temperature range of about 150°C to about 230°C and within a pressure range of about 150 psia (1034 kPa) and about 425 psia (2930 kPa). The oxidation reaction is further carried out in the presence of cobalt, manganese and bromine as catalysts and acetic acid as solvent. The oxygen needed in the reaction is typically supplied to the reactor in the form of compressed air.

In addition, many crude TA manufacturing processes require inert gases such as nitrogen or air. During the crystallization and filtration procedures, the system pressure may be reduced to a lower level, but air is still often required. The crude TA product is dried with blowing of inert gas such as nitrogen or air on the product. The acetic acid solvent in the production process is also removed from the crude TA product and carried (e.g., by the inert gas) to a scrubber for recovery. The dried PTA product is pneumatically carried (e.g., by the inert gas) to a silo or a storage bin or vessel. Thus, large nitrogen or other inert gas flows are required during the TA purification process for the crystallization, centrifugation/filtration, drying, and pneumatic transport of product and solvent to various processing locations.

The quantity of air required for production of crude and purified terephthalic acid is extremely large. In particular, compressed air requirements for a TA production facility are typically in the range of about 250,000 Nm³/h for producing PTA in the amount of about 700,000 tons/year. To accommodate such large amounts of compressed air, an air supplying station equipped with an air compressor is typically provided at the chemical production facility, while a gas storage container typically supplies inert nitrogen gas to the production process. The nitrogen storage container can be filled by a carrier truck with liquefied nitrogen, or, alternatively, nitrogen is continuously supplied from another location via a pipeline extending to the production facility. The air supply can also be enriched with oxygen, such that the oxygen concentration exists at levels of 28% by volume and higher in the enriched air gas supply. The air supply enriched with oxygen has the effect of accelerating the oxidation reaction of p-xylene to TA. In situations in which the air is enriched with oxygen, the oxygen is supplied in a similar manner as the nitrogen supply (e.g., via tanks and/or supplied from another location).

Due to the large amount of compressed air and other gases required for the production of TA, investment and operational costs associated with compressed air and gas supplies are also very large, e.g., in the range of 20% or higher of the equipment costs for the PTA plant. For example, energy costs can become expensive for operating an air compressor that delivers compressed air in the required amounts during PTA production.

In addition, the costs associated with producing other aromatic carboxylic acids can also be quite high due to the large amounts of compressed air and other gases that are required during the production process.

### Summary of the Invention

It is an object of the present invention to manufacture chemical compounds, such as aromatic carboxylic acids, via an oxidation process that is efficient and minimizes production costs.

It is another object of the present invention to manufacture terephthalic acid in an efficient manner that reduces costs associated with supplying compressed and oxygen-enhanced air streams during the manufacturing process.

The aforesaid and other objects are achieved individually and/or in combination, and it is not intended that the present invention be construed as requiring two or more of the objects to be combined unless expressly required by the claims attached hereto.

In accordance with the present invention, a chemical manufacturing system comprises an air compressor configured to receive and pressurize a stream of air to a selected pressure, an air separation unit configured to receive pressurized air from the air compressor and generate at least one stream of oxygen and at least one stream of nitrogen at selected purity levels from the pressurized air, a chemical generation system connected with the air separation unit so as to receive at least a stream of oxygen from the air separation unit, and a reactant supply to provide a reactant to the chemical generation system. During system operation, the reactant is oxidized to form a product within the chemical generation system. In an exemplary embodiment, the reactant is paraxylene, and the chemical generation system produces a terephthalic acid product. In another embodiment, the chemical generation system receives pressurized air from the air compressor.

In another embodiment of the present invention, a method manufacturing a chemical product comprises pressurizing a stream of air to a selected pressure via an air compressor, directing at least a portion of the pressurized air stream from the air compressor to an air separation unit, and converting at least a portion of the pressurized air stream delivered to the air separation unit into at least one stream of oxygen and at least one stream of nitrogen at selected purity levels. A stream of oxygen is delivered from the air separation unit to a chemical generation system connected with the air separation unit, and a reactant (e.g., paraxylene) is provided from a reactant supply to the chemical generation system. The reactant is oxidized within the chemical generation system to form a product (e.g., terephthalic acid).

The above and still further objects, features and advantages of the present invention will become apparent upon consideration of the following detailed description of specific embodiments thereof, particularly when taken in conjunction with the accompanying drawings wherein like reference numerals in the figures are utilized to designate like components.

### Brief Description of the Drawings

Fig. 1 is a diagram of an exemplary embodiment of a terephthalic acid production system in accordance with the present invention.

### Description of Preferred Embodiments

In accordance with the present invention, a chemical production system is combined with an air separation unit (ASU) to form an integrated system, in which an air compressor provides compressed air to both an oxidation chemical reactor and the ASU. The use of a shared air compressor for both the ASU and the chemical reactor reduces equipment costs. In addition, the system of the present invention recovers thermal and mechanical energy through expansion of exhaust gases from the ASU and/or the chemical reactor, in a manner described below, and this recovered energy is applied to the air compressor to reduce energy requirements for providing compressed air during system operation. Further, certain exhaust gases from the ASU and/or the chemical reactor can be recycled for re-use for both the ASU and the chemical reactor during system operation. Air delivered to the chemical reactor can be enriched with oxygen by delivering purified oxygen streams directly from the ASU into the chemical reactor, thus providing an oxygen-enriched air supply to the chemical reactor to enhance oxidation of reactants to form the chemical products of interest while reducing gas supply lines to the chemical reactor and minimizing equipment and production costs.

Preferably, the chemical products produced in accordance with the present invention are aromatic carboxylic acids. Most preferably, purified terephthalic acid (PTA) is manufactured in accordance with the present invention via oxidation of paraxylene (p-xylene) in the presence of a suitable solvent (e.g., acetic acid) and a suitable catalyst (e.g., a combination of cobalt, manganese and bromine). Other examples of aromatic carboxylic acid products that can be produced in accordance with the present invention include, without limitation, phthalic anhydride (formed via oxidation of orthoxylene), purified isophthalic acid and trimellitic acid (both formed via oxidation of metaxylene).

An exemplary embodiment of a chemical production system which combines an ASU and a reactor system is depicted in Fig. 1. The system of Fig. 1 is configured for production of terephthalic acid (TA). However, the invention can also be configured for use with any other aromatic carboxylic acid production system as well as any chemical reactor in which oxygen or oxygen-enriched air is utilized in the chemical reactor to yield an oxidation reaction. System 2 includes a compressor 6 that has an inlet configured to receive air from the ambient surroundings or any other suitable supply source via a supply line 4. The air is compressed to a suitable pressure for use in the TA production system. For example, the air can be compressed by the compressor to pressures in the range of about 150 psia (1034 kPa) to about 425 psia (2930 kPa).

Compressed air is directed from compressor 6, via supply line 8, to a purification section 10. The purification section includes any suitable number (e.g., one or more) and types of purification units to remove selected amounts of impurities from the compressed air stream, such as water or moisture, carbon dioxide, hydrocarbons and particulate materials entrained in the air stream. Examples of purification units suitable for use in the purification section include, without limitation, absorption units, adsorption units (e.g., molecular sieves), distillation units, scrubbers, coalescers and/or mechanical separation units (e.g., mesh and/or other types of filters). Preferably, the compressed air is purified within purification section to reduce the concentrations of or substantially remove at least carbon dioxide and water from the air stream prior to delivery to the TA production system and the ASU.

A supply line 12 secured to the outlet of the purification section 10 delivers purified and compressed air to a location where the supply line branches to a first supply line 13 and a second supply line 14. The first supply line 13 extends to an inlet of an air separation unit (ASU) 16, while the second supply line 14 extends to a TA production system 18. The air can be split at any suitable volumetric ratios between the ASU and the TA production system. For example, the air can be split such that volumetric ratio of air delivered to the ASU to air delivered to the TA production system is in the range of about 1 : 20 to about 1.5 : 1.

Any suitable air separation unit can be provided that processes the compressed air and generates at least one stream of substantially purified oxygen, and preferably also at least another stream of substantially purified nitrogen, for use with the TA production system and/or any other system associated with the ASU. Preferably, the ASU is a conventional or other suitable cryogenic system that utilizes low temperature distillation (e.g., temperatures within the distillation columns can range from about -175°C to about -190°C) at varying pressures (e.g., pressures ranging from about 400 kPa to about 700 kPa) within the ASU to separate and yield substantially purified components such as oxygen, nitrogen, argon, etc. from the pressurized air stream. The purity level of the oxygen and nitrogen gas streams utilizing a cryogenic ASU can be extremely high. For example, oxygen streams can have purity levels as high as about 95% to about 99.9%, while nitrogen streams can be purified to contain impurities on the order of ppm levels or even ppb levels (e.g., when the nitrogen streams are used for applications such as the manufacture of semiconductor and other electronic components). Other exemplary ASU units that may also be used in the system are non-cryogenic systems that separate different components from the air via differing physical properties other than boiling points (e.g., pressure swing adsorption or PSA processes, membrane diffusion-separation systems, etc.).

The air separation unit 16 processes the pressurized air stream received from supply line 13 to yield substantially purified oxygen and nitrogen streams and a stream including argon and/or other rare gases (e.g., krypton, xenon and neon) that may be present in the air stream. In particular, ASU 16 is configured to supply a substantially pure stream of oxygen to TA production system 18 via a supply line 21, and also a substantially pure stream of nitrogen to TA production system 18 via supply line 22. Supply line 21 may be used to control the flow of oxygen to the TA production system so as to regulate oxygen concentration and thus control the oxidation reaction of p-xylene during system operation.

The system can be suitably sized and configured such that the ASU delivers nearly all or, alternatively, a selected portion of the purified oxygen and nitrogen to the TA production system. In the embodiment of Fig. 1, ASU 16 delivers a selected portion of purified oxygen and nitrogen to TA production system 18, while a remainder of the purified oxygen and nitrogen that is produced by the ASU is delivered, via supply lines 27 and 28, to one or more other locations (e.g., storage tanks and/or one or more other processes). The ASU further processes the incoming pressurized air stream to yield a product stream including argon and/or other rare gases as noted above, and this product stream is delivered, via supply line 26, to one or more other locations (e.g., storage tanks and/or one or more other processes). Thus, in accordance with the present invention, the ASU can be configured to deliver multiple streams (e.g., two or more) of purified oxygen, purified nitrogen and/or other purified components, via a plurality of supply lines connected with the ASU, to any selected number of locations.

Any remaining effluents from the pressurized air stream that have not been separated in the purified streams of supply lines 21, 22 and 26-28 are directed from the ASU, via a supply line 29, and are combined with waste gas effluents from the TA production system. These combined effluents are then directed through an expander 34 in a manner described below.

The TA production system 18 receives compressed air from supply line 14 as well as a stream of liquid p-xylene from a supply line 20. The TA production system further includes a reactor that contains a suitable solvent such as acetic acid and a suitable catalyst, such as a combination of cobalt, manganese and bromine, to facilitate oxidation of p-xylene to form crude TA. Oxygen and nitrogen are also delivered from ASU 16 into the reactor and/or other sections of the TA production system, via supply lines 21 and 22. The injection of oxygen into the reactor enriches the incoming air so as to increase the overall oxygen concentration, which has the effect of accelerating the oxidation reaction of the p-xylene reactant to form the crude TA product. Preferably, the temperature within the reactor is maintained within a range of about 150°C to about 230°C, while the pressure within the reactor is maintained within a range of about 150 psia (1034 kPa) and about 425 psia (2930 kPa).

The TA production system 18 can also include a recovery section that facilitates crystallization and purification of the crude TA in a conventional manner (e.g., via filtration, centrifugation, liquid extraction and/or drying) to form a purified terephthalic acid (PTA) product. For example, nitrogen directed from supply line 22 to TA production system 18 can be utilized in the recovery section to facilitate separation of solid TA from the liquor in which the TA is entrained, crystallization and drying of the TA to form PTA. The PTA product can then be transferred pneumatically, utilizing nitrogen gas and via a supply line 24, to a storage vessel or other suitable location. The liquor that is separated from the TA is optionally treated (e.g., in a scrubber) to recover acetic acid for recycle back to the reactor of TA production system 18.

The TA production system further includes a supply line 25 connected between an outlet of the reactor and a portion of effluent supply line 29 to facilitate delivery of waste gas effluents from the reactor to supply line 29 during system operation. The waste gas effluents emerging from the reactor can include water and carbon oxides (e.g., carbon monoxide and carbon dioxide) formed during the oxidation reaction of p-xylene, nitrogen, and excess oxygen that was not consumed during the oxidation reaction. The waste gas effluents emerging from the reactor of the TA production system are at elevated temperatures that can be, for example, in the range of 250°C or greater.

The waste gas effluents flowing within supply line 25 are combined with the effluent stream emerging from the ASU 16 and flowing within supply line 29, and these combined high pressure and high temperature effluent streams are directed to an expander 34 to facilitate recovery of energy from these combined streams. The expander is preferably operable at temperatures in the range of about 250°C to about 400°C or greater and is configured to recover significant amounts of energy in any conventional or other suitable manner upon expansion of these streams flowing through the expander. Preferably, the expander is linked directly or indirectly with the air compressor to facilitate transfer of energy recovered by the expander to be utilized by the compressor during system operation.

In an exemplary embodiment, the expander includes a turbine that is connected to an electrical generator (shown as element 40 in Fig. 1) to convert the mechanical energy delivered to the turbine by the combined streams to electrical energy stored by the generator. The generator also connects with compressor 6 to provide at least some of the power required by the compressor to compress incoming air to a selected pressure during system operation. Alternatively, the generator may provide only a selected portion or none of the recovered energy to the compressor, such that some or all of the recovered energy stored by the generator is utilized for other processes. In an alternative embodiment, the turbine of the expander can be connected directly with the air compressor, via one or more turbine shafts, so as to transfer mechanical energy directly to the air compressor during system operation.

Depending upon the differences in temperatures of the effluent and waste gas streams emerging from the ASU and the TA production system, it may be desirable to heat the combined effluent streams flowing in supply line 29 prior to delivery to expander 34 and/or only partially combine the streams and provide multiple inlets to the expander. In an optional modification to system 2 of Fig. 1, a heat exchanger 30 is disposed along supply line 29 at a location between expander 34 and the connection point between supply line 25 and supply line 29. The heat exchanger establishes a suitable temperature for the combined fluid streams traveling through line 29 prior to entry into expander 34. Further, one or more heat exchangers may be utilized to heat one or both of the effluent streams prior to their being combined together for delivery to the expander. For example, a heat exchanger can be situated in-line in supply line 29 upstream from the location at which supply line 25 merges with supply line 29, such that effluents emerging from the ASU can be heated prior to merging with the waste gas effluents emerging from the TA production system.

The gas streams emerging from expander 34 are directed to a suitable location for further processing or vented to a surrounding atmosphere. Alternatively, some or all of the gases emerging from the expander are recycled and combined with incoming air for re-use by the ASU and the TA production system during system operation. In particular, system 2 optionally includes a recycle line 36 connected between an outlet of expander 34 and a portion of air supply line 4 at a location upstream from compressor 6 so as to facilitate re-use of a selected portion (e.g., some or all) of the outlet gases by the system.

Operation of the system described above is now described with reference to Fig. 1. Air compressor 6 receives a suitable supply of airflow from supply line 4 and compresses the air to a suitable pressure (e.g., within a pressure range of about 150 psia or 1034 kPa and about 425 psia or 2930 kPa). The compressed air is then delivered, via supply line 8, to purification section 10, where the concentrations of selected components (e.g., carbon dioxide and water) within the air stream are reduced to desired values prior to delivery to supply line 12. The purified air stream flowing within supply line 12 is then split into supply lines 13 and 14 at selected ratios between ASU 16 and TA production system 18 (e.g., at any of the volumetric ratios described above).

Air entering ASU 16 via supply line 13 is divided into two or more sets of oxygen streams (via supply lines 21 and 27) and two or more sets of nitrogen streams (via supply lines 22 and 28). Depending upon oxygen requirements for the oxidation reaction of p-xylene, a selected amount of oxygen is delivered from the ASU to TA production system 18 via supply line 21. The amount of oxygen delivered to the TA production system may be continuous or, alternatively, modified during system operation. Nitrogen is also delivered to the TA production system via supply line 22. Rare gases can also be separated from the air in ASU 16 and delivered to a suitable location via supply line 26, while the remaining effluents emerging from the ASU are directed to expander 34.

The TA production system receives compressed air via supply line 14, liquid p-xylene from supply line 20 and selected amounts of oxygen and nitrogen from supply lines 21 and 22. The reactor of TA production system 18 receives at least the air, p-xylene and selected amounts of oxygen to yield TA in the presence of acetic acid solvent and a cobalt/manganese/bromine catalyst. The crude TA is further crystallized and purified within the recovery section of the TA production system, where the TA is dried with nitrogen flowing from the ASU (via supply line 22) and separated from solvent to yield purified terephthalic acid (PTA). The PTA leaves the TA production system via supply line 24 for delivery to a suitable location (e.g., one or more storage vessels).

Waste gases emerging from TA production system 18 (via supply line 25) are combined with the effluents from the ASU in supply line 29, the combined effluents are optionally heated in heat exchanger 30, and then delivered to expander 34. Preferably, the combined effluents are in a temperature range of about 200°C to about 400°C and within a pressure range of about 1500 kPa to about 2500 kPa when the effluents are delivered to the expander. The expander recovers energy from the expanding gases flowing through it, and the recovered energy is provided for use by compressor 6 and/or components in other systems. For example, at the temperature and pressure ranges provided above for the combined effluents, the expander can recover energy from the expanding effluent gases in the range of about 2 MW to about 20 MW. A selected portion (e.g., some or all) of the expanded gases emerging from the expander can be recycled back to the compressor, via line 36, for re-use by the system.

Thus, the systems of the present invention facilitate the reduction in power requirements and system operating costs for the manufacture of PTA by integrating an ASU with a TA (or other chemical) production system. A single compressor provides compressed air to both the ASU and the TA production system and oxygen and nitrogen are supplied at selective flow rates from the ASU directly to the TA production system to enhance PTA production. The synergies associated with combining an ASU with a TA (or other chemical) production system eliminates the need for extensive piping and/or storages tanks associated with providing substantially pure oxygen to enrich the air stream within the reactor so as to accelerate oxidation reactions and thus increase the production rate of TA, since oxygen and nitrogen are supplied directly from the ASU to the TA production system. In addition, the effluents and waste gases generated in the system are processed to recover energy for use by the system compressor and/or for other systems.

The ASU can be suitably designed to efficiently produce gases needed by the TA production system and/or other systems at desired concentrations, temperatures and pressures. In addition, while the systems described above provide for optional recirculation of gases, the integration of the ASU with the TA production system reduces or, in certain situations, may even eliminate the need for gas recirculation since the ASU can be suitable sized and configured to provide the required gas flows during system operation. By eliminating the need for recirculation, the need for additional recycle piping is also eliminated thus reducing system costs. Further, the systems can be designed such that the ASU provides all the necessary compressed gas flows from the compressor to the TA production system, thus eliminating the need for additional piping from the compressor to the TA production system.

The systems of the present invention facilitate selective control of oxygen flows at selected concentrations and flow rates from the ASU to the TA production system. Thus, oxygen may be added to enrich compressed air on an as-needed basis during system operation, which further enhances the economics of TA production. Further, the ASU can be suitably sized based upon system requirements to provide purified oxygen and nitrogen to the TA production system as well as one or more additional systems.

In addition, as noted above, the systems described above are not limited to TA production processes. Rather, the systems can be implemented for use with any chemical reactor or production process in which oxygen, nitrogen and/or any other product flows from an ASU are needed for oxidation and/or any other reactions to yield an aromatic carboxylic acid or any other desired chemical product.

Having described novel systems and methods for providing gases to aromatic carboxylic acid manufacturing processes, it is believed that other modifications, variations and changes will be suggested to those skilled in the art in view of the teachings set forth herein. It is therefore to be understood that all such variations, modifications and changes are believed to fall within the scope of the present invention as defined by the appended claims.

## Claims

1. A chemical manufacturing system comprising:
an air compressor configured to receive and pressurize a stream of air to a selected pressure;
an air separation unit configured to receive pressurized air from the air-compressor and generate at least one stream of oxygen and at least one stream of nitrogen at selected purity levels from the pressurized air;
a chemical generation system connected with the air separation unit so as to receive at least a stream of oxygen from the air separation unit; and
a reactant supply to provide a reactant to the chemical generation system;
wherein, during system operation, the reactant is oxidized to form a product within the chemical generation system.

2. The system of claim 1, wherein the chemical generation system further receives pressurized air from the air compressor.

3. The system of claim 2, further comprising:
an expander disposed downstream from the air separation unit and the chemical generation system, wherein the expander is configured to receive and extract energy from effluents flowing from at least one of the air separation unit and the chemical generation system.

4. The system of claim 3, wherein the system is configured to facilitate a transfer of at least a portion of the extracted energy from the expander to the air compressor.

5. The system of claim 4, further comprising a heat exchanger disposed upstream from the expander and configured to heat effluents flowing from at least one of the air separation unit and the chemical generation system to a selected temperature prior to delivery to the expander.

6. The system of claim 3, further comprising:
a recycle line configured to deliver at least a portion of expanded gases emerging from the expander to an inlet of the air compressor.

7. The system of claim 3, further comprising:
at least one purification unit disposed downstream from the air compressor and upstream from the air separation unit, wherein-the at least one purification unit is configured to remove selected amounts of carbon dioxide and water from the pressurized air stream emerging from the air compressor.

8. The system of claim 3, wherein the air separation unit is further configured to generate a second stream of oxygen and a second stream of nitrogen at selected purity levels from the pressurized air, and the second streams of oxygen and nitrogen are delivered to at least one selected location separate from the chemical generation system.

9. The system of claim 3, wherein the chemical generation system is further configured to receive the stream of nitrogen from the air separation unit, and the reactant supply provides an aromatic compound reactant to the chemical generation system such that an aromatic carboxylic acid product is formed by oxidation of the reactant within the chemical generation system.

10. The system of claim 9, wherein the reactant supply provides paraxylene to the chemical generation system and the chemical generation system is configured to yield a terephthalic acid product.

11. A method of manufacturing a chemical product, comprising:
pressurizing a stream of air to a selected pressure via an air compressor;
directing at least a portion of the pressurized air stream from the air compressor to an air separation unit;
converting at least a portion of the pressurized air stream delivered to the air separation unit into at least one stream of oxygen and at least one stream of nitrogen at selected purity levels;
delivering a stream of oxygen from the air separation unit to a chemical generation system that is connected to the air separation unit;
providing a reactant from a reactant supply to the chemical generation system; and
oxidizing the reactant within the chemical generation system to form a product.

12. The method of claim 11, further comprising:
directing at least another portion of the pressurized air from the air compressor to the chemical generation system.

13. The method of 12, further comprising:
delivering effluents from at least one of the air separation unit and the chemical generation system to an expander; and
extracting energy from the effluents delivered to the expander.

14. The method of claim 13, further comprising:
transferring at least a portion of the extracted energy from the expander to the air compressor.

15. The method of claim 14, further comprising:
heating effluents flowing from at least one of the air separation unit and the chemical generation system to a selected temperature prior to delivery to the expander.

16. The method of 13, further comprising:
delivering at least a portion of expanded gases emerging from the expander to an inlet of the air compressor.

17. The method of 13, further comprising:
purifying the pressurized air stream exiting from the air compressor to remove selected amounts of carbon dioxide and water prior to delivering the pressurized air stream to the air separation unit.

18. The method of claim 13, wherein the air separation unit converts the pressurized air stream delivered to the air separation unit into a plurality of streams of oxygen and a plurality of streams of nitrogen at selected purity levels, and the method further comprises:
delivering a second a second stream of oxygen and a second stream of nitrogen formed by the air separation unit to at least one selected location separate from the chemical generation system.

19. The method of claim 13, further comprising:
directing a stream of nitrogen from the air separation unit to the chemical generation system;
wherein the reactant comprises an aromatic compound reactant and the product comprises an aromatic carboxylic acid product.

20. The method of claim 19, wherein the reactant comprises paraxylene, and the produce comprises terephthalic acid.

21. A chemical manufacturing system comprising:
an air compressor configured to receive and pressurize a stream of air to a selected pressure;
a first means for receiving pressurized air from the air compressor and generating at least one stream of oxygen and at least one stream of nitrogen at selected purity levels; and
a second means for generating a chemical product by oxidation of a reactant supplied to the means for generating a chemical product, wherein the second means is connected to the air compressor to receive pressurized air from the air compressor and is further connected to the first means to receive a stream of oxygen from the first means.

22. The system of claim 21, further comprising:
a paraxylene supply source to deliver paraxylene as the reactant to the second means;
wherein the second means receives paraxylene is configured to generate a terephthalic acid product by oxidation of paraxylene within the second means.

23. The system of claim 22, further comprising:
a third means for receiving and extracting energy from effluents received from at least one of the first means and the second means.

24. The system of claim 23, wherein the third means is configured to transfer at least a portion of the extracted energy to the air compressor.
